# EUROPÄISCHE PATENTSCHRIFT

(11) **EP 3 715 177 B1**
(45) Veröffentlichungstag und Bekanntmachung des Hinweises auf die Patenterteilung: **10.05.2023**
(21) Anmeldenummer: 19164978.9
(22) Anmeldetag: 25.03.2019
(51) Int. Cl.: B60Q 1/00, B60R 11/04, H04N 5/225

(54) **FAHRZEUGSCHEINWERFER, INSBESONDERE KRAFTFAHRZEUGSCHEINWERFER**
HEADLIGHT FOR VEHICLES, IN PARTICULAR MOTOR VEHICLE HEADLIGHT
PHARES DE VÉHICULE, EN PARTICULIER PHARES DE VÉHICULE AUTOMOBILE

(43) Veröffentlichungstag der Anmeldung: 30.09.2020
(73) Patentinhaber: ZKW Group GmbH, 3250 Wieselburg (AT)
(72) Erfinder: Bierwipfl, Christoph, 3376 St. Martin am Ybbsfelde (AT); Weißensteiner, Stefan, 3961 Waldenstein (AT); Reiter, Thomas, 3325 Ferschnitz (AT)
(74) Vertreter: Patentanwaltskanzlei Matschnig & Forsthuber OG

(56) Entgegenhaltungen:
- EP-A2- 1 120 310
- WO-A1-2018/030239
- DE-A1-102015 003 688
- US-A1- 2007 025 596

## Beschreibung

Die Erfindung betrifft einen Fahrzeugscheinwerfer, insbesondere Kraftfahrzeugscheinwerfer, umfassend ein mittels einer lichtdurchlässigen Abdeckscheibe geschlossenes Fahrzeugscheinwerfergehäuse, zumindest ein innerhalb des Fahrzeugscheinwerfergehäuses angeordnetes Leuchtmodul zu Erzeugung einer Lichtverteilung in eine Hauptabstrahlrichtung, und zumindest ein innerhalb des Fahrzeugscheinwerfergehäuses angeordnetes Sensormodul, wobei das zumindest eine Sensormodul zumindest einen optischen Sensor zur optischen Erfassung der Fahrzeugscheinwerferumgebung aufweist, wobei dem zumindest einen optischen Sensor hierzu ein Erfassungsbereich zugeordnet ist, und wobei das Sensormodul dergestalt angeordnet ist, dass die Erfassung der Fahrzeugscheinwerferumgebung durch die Abdeckscheibe hindurch erfolgt.

Weiters betrifft die Erfindung ein Fahrzeug umfassend zumindest einen erfindungsgemäßen Fahrzeugscheinwerfer.

Solche Fahrzeugscheinwerfer sind beispielsweise aus US2007/025596A1, DE102015003688A1, EP1120310A2 und WO2018/030239A1 bekannt geworden. Optische Sensoren werden dabei in den Fahrzeugscheinwerfer integriert, die zur Erfassung der Fahrzeugumgebung eingerichtet sind.

Jeder Sensor hat ein limitiertes Erfassungsfeld (sog. field of view), das einen starren maximalen Erfassungsbereich des Sensors darstellt. Bisher wurde abhängig von der geforderten Größe des Erfassungsfelds entweder ein einzelner Sensor mit ausreichend großen Erfassungsfeld bestimmt, oder es durch Kombination einzelner Sensoren versucht, das Gesamterfassungsfeld zu erweitern. Da beide Vorgehensweisen gewisse Nachteile aufweisen, wurde in der Regel ein Kompromiss aus tatsächlich realisiertem Erfassungsfeld und dem Aufwand bei der Auswahl und dem Einbau der verwendeten Sensoren eingegangen.

Eine Aufgabe der Erfindung besteht darin, eine alternative Möglichkeit zur kostengünstigen und robusten Umfelderfassung zu schaffen. Diese Aufgabe wird mit einem Fahrzeugschweinwerfer der eingangs genannten Art gelöst, der erfindungsgemäß zumindest ein ansteuerbares Schwenkmittel zum räumlichen Verschwenken des gesamten Erfassungsbereichs des zumindest einen optischen Sensors aufweist. Auf diese Weise kann der an und für sich starre Erfassungsbereich des Sensors erweitert werden, sodass eine Möglichkeit geschaffen ist, dass eine ausreichende Umfelderfassung über bereits einen einzigen handelsüblichen kostengünstigen und robusten Sensor erfolgen kann.

Der Ausdruck "Hauptabstrahlrichtung" der Lichtverteilung bezeichnet sofern nicht anders angegeben immer eine Vorwärtsfahrtrichtung des Fahrzeugs, in dem der Kraftfahrzeugscheinwerfer ordnungsgemäß verbaut ist.

Die Anforderung an das Schwenkmittel ist deutlich geringer hinsichtlich der aufzuwendenden Kosten und der Komplexität des technischen Systems. Zudem kann auf diese Weise der Datenstrom, der durch den Einsatz einer Mehrzahl von Sensoren deutlich erhöht werde, gering gehalten werden, wodurch die Anforderungen an die Systemarchitektur ebenfalls niedrig gehalten werden können.

Als zusätzliche Ergänzung des Erfassungsfeldes, oder aus Gründen der Redundanz ist erfindungsgemäß vorgesehen, dass der Fahrzeugscheinwerfer zumindest einen zusätzlichen im Fahrzeugscheinwerfer positions- und drehfest angeordneten optischen Sensor aufweist, der in dem Fahrzeugscheinwerfer dergestalt angeordnet ist, dass sein Erfassungsbereich in Hauptabstrahlrichtung des Fahrzeugs orientiert ist.

Insbesondere kann vorgesehen sein, dass der Fahrzeugscheinwerfer eine Fahrzeugscheinwerferrecheneinheit zur Ansteuerung des zumindest einen ansteuerbaren Schwenkmittels zum räumlichen Verschwenken des gesamten Erfassungsbereichs des zumindest einen optischen Sensors umfasst, wobei der Fahrzeugscheinwerfer zudem eine Schnittstelle aufweist, über die Daten mit einem den Fahrzeugschweinwerfer umfassenden Fahrzeug austauschbar sind, wobei die Fahrzeugscheinwerferrecheneinheit zur Verarbeitung der Daten eingerichtet ist und die Ansteuerung des zumindest einen Schwenkmittels unter Berücksichtigung der Daten erfolgt. Die Ansteuerung kann dabei beispielsweise abhängig von einer GPS-Fahrzeugposition, einem Lenkwinkel, der Fahrtrichtung, der Geschwindigkeit, von Kartenmaterial (Umgebungsdaten) etc. sein.

Dabei kann insbesondere vorgesehen sein, dass der Fahrzeugscheinwerferrecheneinheit die von dem zumindest einen optischen Sensor erfassten Daten zugeführt sind, und die Fahrzeugscheinwerferrecheneinheit dazu eingerichtet ist, diese Daten auf das Vorhandensein von verkehrstechnisch relevanten Umgebungsobjekten zu prüfen und bei Feststellen zumindest eines Umgebungsobjekts das Schwenkmittel dergestalt anzusteuern, dass der Schwerpunkt des Erfassungsbereichs in Richtung des erfassten Umgebungsobjekts gelenkt wird. Bei den verkehrstechnisch relevanten Umgebungsobjekten kann es sich beispielsweise um Objekte handeln, die aus der folgenden Liste ausgewählt sind: {Querstraße einer Straßenkreuzung, umgebende Fahrstreifen, Verkehrsteilnehmer}. Auf diese Weise ist eine dynamische Anpassung und Lenkung des Erfassungsbereichs im Sinne einer Objektverfolgung möglich.

Vorzugsweise ist vorgesehen, dass das Schwenkmittel dergestalt ausgebildet ist, dass die Schwenkbewegung des Erfassungsbereiches ausgehend von einer horizontalen Einbauposition des Fahrzeugscheinwerfers entlang oder innerhalb einer horizontalen Ebene erfolgt. Dies kann z.B. anhand einer Drehung um eine vertikale Achse realisiert werden.

Weiters kann vorgesehen sein, dass das Schwenkmittel dazu eingerichtet ist, den Erfassungsbereich zwischen zumindest zwei Positionen zu verschwenken, wobei in einer ersten Position der Schwerpunkt des Erfassungsbereiches zumindest teilweise in Hauptabstrahlrichtung gerichtet ist und in einer zweiten Position der Schwerpunkt des Erfassungsbereiches gegenüber der ersten Position zumindest teilweise seitwärts verschwenkt ist, wobei insbesondere vorgesehen sein kann, dass in der zweiten Position der Erfassungsbereich zumindest teilweise entgegen eine Hauptabstrahlrichtung orientiert ist. Sofern der Erfassungsbereich mit seinem Schwerpunkt einen Winkel von mehr als 90° in Bezug auf die Hauptabstrahlrichtung einnimmt, so blickt der Schwerpunkt bereits teilweise rückwärts. Abhängig von der Einbaulauge des optischen Sensors, der Breite seines Erfassungsbereichs sowie der Ausbildung des Schwenkmittels ist es auf diese Weise möglich, Objekte, die sich seitlich und sogar schräg hinter dem Fahrzeug befinden zu erfassen.

Vorzugsweise kann vorgesehen sein, dass der Erfassungsbereich in der zweiten Position um einem Winkel in Höhe von zumindest 30° in Bezug auf den Erfassungsbereich der ersten Position verschwenkt ist, insbesondere verdreht ist, wobei die Verschwenkbewegung um eine vertikal orientierte Achse erfolgt.

Insbesondere kann vorgesehen sein, dass der zumindest eine Sensor verschwenkbar gelagert ist und das ansteuerbare Schwenkmittel einen Aktuator zum Verschwenken des zumindest einen Sensors umfasst.

Alternativ dazu kann vorgesehen sein, dass das ansteuerbare Schwenkmittel ein ansteuerbares, schwenkbares Spiegelelement umfasst, wobei der zumindest eine Sensor auf das Spiegelelement gerichtet ist und der Erfassungsbereich über das Spiegelelement gelenkt wird. Dabei kann vorgesehen sein, dass das Spiegelelement eine MEMS-Komponente mit einer Vielzahl an flächig nebeneinander angeordneten und steuerbaren Mikrospiegel ist, über die der Erfassungsbereich gelenkt werden kann. Insbesondere kann vorgesehen sein, dass die Umlenkung über das Spiegelelement hochdynamisch veränderbar ist und der zumindest eine Sensor zur hochdynamischen Erfassung des durch das Spiegelelement gelieferten optischen Bildes eingerichtet ist. Unter dem Ausdruck "hochdynamisch" wird eine Anordnung verstanden, die Umlenkbefehle innerhalb von wenigen Millisekunden umsetzen kann bzw. Sensoren, die Bilder innerhalb von Millisekunden vollständig aufnehmen können.

Insbesondere kann vorgesehen sein, dass das Spiegelelement ein einstückiger Spiegel ist, der um eine vertikale Achse drehbar gelagert ist, wobei dem Spiegel ein Antrieb zugeordnet ist, mit dem die Orientierung des Spiegels durch Drehung um die vertikale Achse veränderbar ist. Im Übrigen sei an dieser Stelle erwähnt, dass eine Schwenkung mittels dem Schwenkmittel nicht zwingend nur um eine Achse erfolgen muss. Es könnte auch eine Verschwenkung um zwei Achsen vorgesehen sein. Auch könnte eine Verschwenkung um eine horizontale Achse vorgesehen sein, beispielsweise um Objekte in Positionen unterschiedliche Höhe zu erfassen, wie beispielsweise Ampeln oder Verkehrstafeln.

Weiters kann vorgesehen sein, dass das Spiegelelement in Hauptabstrahlrichtung vor dem zumindest einen optischen Sensor angeordnet und dergestalt schwenkbar ist, dass in einer ersten Position der Erfassungsbereich des optischen Sensors das Spiegelelement passiert, ohne dieses zu erfassen, und in einer zweiten Position der Erfassungsbereich durch das Spiegelelement dergestalt umgelenkt wird, dass dieser zumindest teilweise entgegen der Hauptabstrahlrichtung des Fahrzeugscheinwerfers orientiert ist. Hierfür kann insbesondere ein physischer Spiegel mit Drehachse in einem Randbereich vorgesehen sein, wobei die Drehachse in einem für den Sensor nicht sichtbaren Randbereich liegt.

Die Erfindung betrifft ferner ein Fahrzeug, umfassend zwei Fahrzeugschweinwerfer nach einem der vorhergehenden Ansprüche, nämlich einen linken und einen rechten Fahrzeugschweinwerfer, wobei das Fahrzeug eine Fahrzeugrecheneinheit aufweist, die mit der Fahrzeugscheinwerferrecheneinheit des jeweiligen Fahrzeugscheinwerfers zur Kommunikation verbunden ist, wobei die Fahrzeugrecheneinheit Informationen bezüglich der Fahrzeuges ausgewählt aus der folgenden Gruppe erfasst {GPS-Signale, Lenkwinkel, Fahrtrichtung, Geschwindigkeit, Kartenmaterial, Beladung, Beschleunigung} und die Fahrzeugscheinwerfer, insbesondere das zumindest eine Schwenkmittel, in Abhängigkeit davon ansteuert. Auch kann eine Kommunikation mit der Umgebung erfolgen (Car2x (5G)).

Weiters kann vorgesehen sein, dass das Fahrzeug zur Erfassung von Kreuzungsbereichen eingerichtet ist, und weiters dazu eingerichtet ist, anhand der Position und Orientierung des Fahrzeuges in Bezug auf einen erfassten Kreuzungsbereich die Fahrzeugscheinwerfer anzusteuern.

Die Erfindung wird im Folgenden nochmals in anderen Worten beispielhaft kurz beschrieben:
Aktuell ist das Field of View (FOV) von Kameras im Fahrzeug starr vorgegeben (meist hinter der Windschutzschreibe). Neben einer optionalen Integration von Kameras in Fahrtrichtung, welche speziell für Fernsicht geeignet ist, schlagen wir vor, für den Kreuzungsbereich eine weitere Kamera abhängig von den Fahrzeugparametern zu schwenken.

Beispielhaft kann die Kamera abhängig von folgenden Kriterien geschwenkt werden:
- Geschwindigkeitsabhängig, um z.B. 90° zur Fahrachse geschwenkt, um das FOV zur Seite zu erweitern
- vom Lenkradwinkel, zur Erkennung der Fahrrichtung des Fahrers
- von GPS, zur Erkennung von Kreuzungen
- durch Erkennung mittels Kameraalgorithmen: der Erkennung der Kamera
   o Erkennung von Kreuzungen, Schwenkbereich wird so gewählt, dass der ganze Kreuzungsbereich von der Sensorik abgedeckt ist.
   o Erkennung einer Fahrspur (Mittelstreifen)
   o Erkennung von Objekten, weiter Verfolgung von high Priority Objekten -> andere Verkehrsteilnehmer, Fußgänger, Radfahrer,...

Technische Umsetzung der Kameraführung:
- Zur Umsetzung könnten folgende Technologien herangezogen werden: Micro-Electro-Meachanical System (MEMS), Polygon Spiegelrad, klappender (schwingender) Spiegel, etc.
- Die Kamera wird im Scheinwerfer auf eine Schwenkvorrichtung montiert und richtet das FOV direkt in Richtung Fahrbahn.
- Die Kamera wird starr montiert, und richtet das FOV auf einen Spiegel, welcher auf die Fahrbahn gelenkt wird. Dieser Spiegel ist drehbar ausgeführt. Vorteil von geringerer Masse der schwenkbaren Einheit. Die Positionierung der Hardware kann in Bereich verlegt werden, die von zB. Designflächen verdeckt ist. Das bietet den Vorteil, dass die Hardware nicht sichtbar platziert ist.
- Die Kamera wird starr montiert, und richtet das FOV auf einen Spiegel, welcher auf die Fahrbahn gelenkt wird. Dieser Spiegel ist schwenkbar ausgeführt. Der Spiegel scannt permanent die Umgebung. Abhängig von den Fahrzeugparametern wird der Scanbereich variabel gewählt. Die Framerate wird dazu dynamisch angepasst. ZB bei geringer Geschwindigkeit, scannt der Spiegel von 120° bis 0° zur Fahrachse. Bei höherer Geschwindigkeit (auf Autobahnen) scannt der Spiegel von 30° bis 0° zur Fahrachse. (siehe Abb.)
   ∘ Scan Methodik über den gesamten Schwenkbereich:
      ▪ Permanente Aufnahme von Einzelbilder
      ▪ Gezielte Aufnahme von Einzelbilder (Panormabilder)
   ∘ Bildverarbeitungs Methodik
      ▪ Bildaufnahme -> Auswertung -> Bild löschen
      ▪ Kompletten Schwenkbereich aufnehmen -> Auswertung -> Bilder löschen
- Die Kamera wird starr montiert, und richtet das FOV auf einen Spiegel, welcher auf die Fahrbahn gelenkt wird. Dieser Spiegel ist schwenkbar ausgeführt. Der Spiegel scannt permanent die Umgebung. Ein weiterer Spiegel wird im Strahlengang nachgelagert und je nach Situation zu oder weggeschaltet. Damit kann das FOV zb. ohne Strahlengang zum zweiten Spiegel nach vorne, und mit Spiegel nach hinten gerichtet werden.

Die Erfindung ist im Folgenden anhand beispielhafter und nicht einschränkender Ausführungsformen näher erläutert, die in den Figuren veranschaulicht sind. Darin zeigt
Figur 1 eine schematische Darstellung eines Kraftfahrzeuges umfassend einen erfindungsgemäßen Fahrzeugscheinwerfer in einem Kreuzungsbereich,
Figur 2 eine schematische Darstellung des Kraftfahrzeugs nach Fig. 1 mit verschwenkten Erfassungsbereichen der Fahrzeugscheinwerfer,
Figur 3 eine schematische Darstellung eines erfindungsgemäßen Fahrzeugschweinwerfers mit einem Erfassungsbereich in einer ersten Position,
Figur 4 eine schematische Darstellung des Fahrzeugschweinwerfers gemäß Fig. 3 mit einem Erfassungsbereich in einer zweiten Position,
Figur 5 eine schematische Darstellung eines Fahrzeuges umfassend erfindungsgemäßen Fahrzeugschweinwerfer in einem ersten Betriebszustand, und
Figur 6 eine schematische Darstellung des Fahrzeuges gemäß Fig. 5 in einem zweiten Betriebszustand.

In den folgenden Figuren bezeichnen - sofern nicht anders angegeben - gleiche Bezugszeichen gleiche Merkmale.

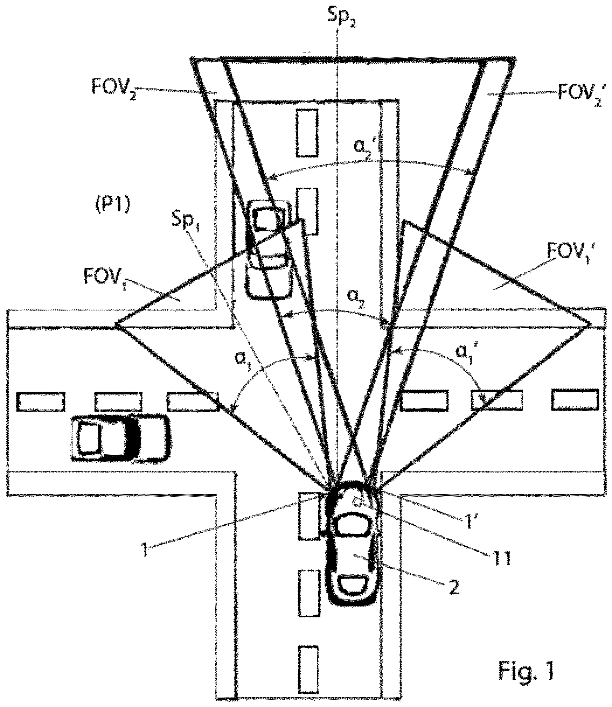

Figur 1 zeigt eine schematische Darstellung eines Kraftfahrzeuges 2 umfassend zwei erfindungsgemäße Fahrzeugscheinwerfer 1 und 1'. Das Fahrzeug 2 befindet sich dabei in einem Kreuzungsbereich.

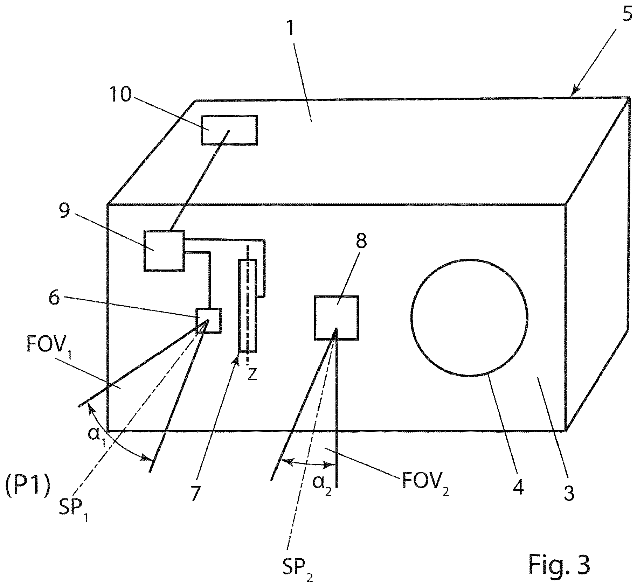

Wie in Figuren 3 beispielhaft dargestellt und an der Bezugszeichen zuordenbar ist, umfasst jeder Fahrzeugscheinwerfer 1 (bzw. 1') ein mittels einer lichtdurchlässigen Abdeckscheibe 3 geschlossenes Fahrzeugscheinwerfergehäuse 5. Weiters umfasst der Fahrzeugscheinwerfer 1 zumindest ein innerhalb des Fahrzeugscheinwerfergehäuses 5 angeordnetes Leuchtmodul 4 zu Erzeugung einer Lichtverteilung in eine Hauptabstrahlrichtung, und zumindest ein innerhalb des Fahrzeugscheinwerfergehäuses 5 angeordnetes Sensormodul 6, wobei das zumindest eine Sensormodul 6 zumindest einen optischen Sensor zur optischen Erfassung der Fahrzeugscheinwerferumgebung aufweist. Dem optischen Sensor ist hierzu ein Erfassungsbereich (auch "field of view" genannt) FOV₁ zugeordnet, wobei das Sensormodul 6 dergestalt angeordnet ist, dass die Erfassung der Fahrzeugscheinwerferumgebung durch die Abdeckscheibe 3 hindurch erfolgt.

Der Fahrzeugscheinwerfer 1 weist zumindest ein ansteuerbares Schwenkmittel 7 zum räumlichen Verschwenken des gesamten Erfassungsbereichs FOV₁ des optischen Sensors 6 auf.

Die Hauptabstrahlrichtung des Leuchtmoduls stimmt typischerweise mit der Vorwärtsfahrrichtung des Kraftfahrzeuges, in dem der Scheinwerfer 1 verbaut ist, überein.

Weiters ist in Fig. 3 erkennbar, dass der Fahrzeugscheinwerfer 1 zumindest einen zusätzlichen im Fahrzeugscheinwerfer 1 positions- und drehfest angeordneten optischen Sensor 8 aufweist, der in dem Fahrzeugscheinwerfer 1 dergestalt angeordnet ist, dass sein Erfassungsbereich FOV₂ in Hauptabstrahlrichtung des Fahrzeugs 2 orientiert ist. Dieser Sensor 8 ist nicht drehbar ausgeführt. Auch ist diesem Sensor kein Umlenkmittel zugeordnet. Der Erfassungsbereich FOV₂ des Sensors 8 ist damit starr und in seiner Orientierung in Bezug auf den Fahrzeugscheinwerfer 1 unveränderbar.

Der Fahrzeugscheinwerfer 1 umfasst weiters eine Fahrzeugscheinwerferrecheneinheit 9 zur Ansteuerung des zumindest einen ansteuerbaren Schwenkmittels 7 zum räumlichen Verschwenken des gesamten Erfassungsbereichs FOV₁ des zumindest einen optischen Sensors 6. Zudem weist der Fahrzeugscheinwerfer 1 eine Schnittstelle 10 auf, über die Daten mit einem den Fahrzeugschweinwerfer 1 umfassenden Fahrzeug 2 austauschbar sind. Die Fahrzeugscheinwerferrecheneinheit 9 ist dabei zur Verarbeitung der Daten eingerichtet, wobei die Ansteuerung des zumindest einen Schwenkmittels 7 unter Berücksichtigung der Daten erfolgt.

Zudem kann vorgesehen sein, dass der Fahrzeugscheinwerferrecheneinheit 9 die von den optischen Sensoren 6 und 8 erfassten Daten zugeführt sind, und die Fahrzeugscheinwerferrecheneinheit 9 dazu eingerichtet ist, diese Daten auf das Vorhandensein von verkehrstechnisch relevanten Umgebungsobjekten zu prüfen. Bei Feststellen zumindest eines Umgebungsobjekts kann das Schwenkmittel 7 dergestalt angesteuert werden, dass der Schwerpunkt SP₁ des Erfassungsbereichs FOV₁ in Richtung des erfassten Umgebungsobjekts gelenkt wird. Bei dem verkehrstechnisch relevanten Umgebungsobjekt kann es sich beispielsweise um eine Querstraße einer Straßenkreuzung, umgebende Fahrstreifen oder Verkehrsteilnehmer handeln.

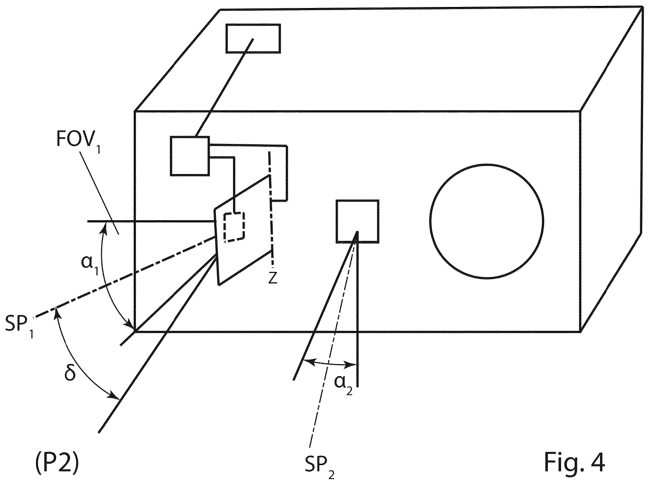

Anhand eines Vergleichs der Figuren 3 und 4 (in der zur besseren Übersicht einige Bezugszeichen weggelassen wurden) wird deutlich, dass das Schwenkmittel 7 dazu eingerichtet ist, den Erfassungsbereich FOV₁ zwischen zumindest zwei Positionen zu verschwenken. Genauer gesagt, ist in einer ersten Position (P1) der Schwerpunkt SP₁ (der beispielsweise an einer Symmetrieachse des Erfassungsbereichs zu liegen kommt) des Erfassungsbereiches zumindest teilweise in Hauptabstrahlrichtung gerichtet (siehe Fig. 3). In einer zweiten Position (P2) hingegen ist der Schwerpunkt SP₁ des Erfassungsbereiches gegenüber der ersten Position (P1) zumindest teilweise seitwärts verschwenkt.

Ein Vergleich der zweiten Position (P2) gemäß Figur 4 mit der ersten Position (P1) zeigt, dass der Erfassungsbereich in der zweiten Position um einem Winkel δ verschoben ist, der beispielsweise zumindest 30° betragen kann.

Im vorliegenden Ausführungsbeispiel ist das ansteuerbare Schwenkmittel 7 als schwenkbares Spiegelelement ausgeführt, anhand dessen der Erfassungsbereich, der auf das Spiegelelement gerichtet ist, verschwenkt wird. Alternativ dazu könnte vorgesehen sein, dass der Sensor 6 verschwenkbar gelagert ist, und das ansteuerbare Schwenkmittel 7 einen Aktuator zum Verschwenken des Sensors 6 umfasst.

Weiters kann vorgesehen sein, dass das Spiegelelement eine MEMS-Komponente mit einer Vielzahl an flächig nebeneinander angeordneten und steuerbaren Mikrospiegel ist, über die der Erfassungsbereich gelenkt werden kann.

In der in den Figuren 3 und 4 dargestellten Ausführungsform ist das Spiegelelement als einstückiger Spiegel ausgeführt, der um eine vertikale Achse z drehbar gelagert ist, wobei dem Spiegel ein in den Figuren nicht dargestellter Antrieb zugeordnet ist, mit dem die Orientierung des Spiegels durch Drehung um die vertikale Achse veränderbar ist. Dabei ist das Spiegelelement in Hauptabstrahlrichtung gesehen vor dem optischen Sensor 6 angeordnet und dergestalt schwenkbar, dass in einer ersten Position der Erfassungsbereich FOV₁ des optischen Sensors 6 das Spiegelelement passiert, ohne dieses zu erfassen, und in einer zweiten Position der Erfassungsbereich FOV₂ durch das Spiegelelement dergestalt umgelenkt wird, dass dieser zumindest teilweise entgegen der Hauptabstrahlrichtung des Fahrzeugscheinwerfers 1 orientiert ist.

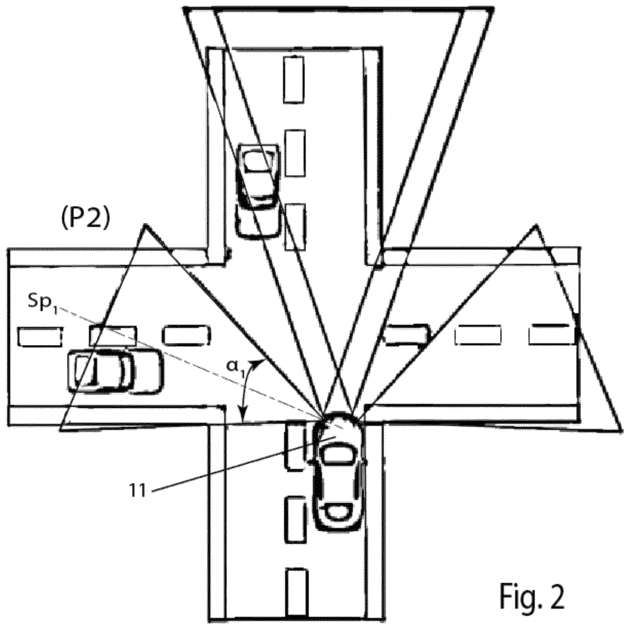

Mit Blick auf Figuren 1 und 2 wird eine beispielhafte Anwendung erfindungsgemäßer Fahrzeugscheinwerfer 1 und 1' verdeutlicht. Das Fahrzeug 2 umfasst zwei Fahrzeugschweinwerfer 1 und 1', nämlich einen linken und einen rechten Fahrzeugschweinwerfer. Ferner umfasst das Fahrzeug 2 eine Fahrzeugrecheneinheit 11, die mit der Fahrzeugscheinwerferrecheneinheit 9 des jeweiligen Fahrzeugscheinwerfers 1 bzw. 1' zur Kommunikation verbunden ist. Die Fahrzeugrecheneinheit 11 erfasst Informationen bezüglich der Fahrzeuges, die beispielsweise die Fahrzeugposition, Orientierung, Lenkwinkel, Fahrtrichtung etc. umfassen können. Die Schwenkmittel 7 der Scheinwerfer 1 und 1' können dann in Abhängigkeit davon angesteuert werden.

In dem Ausführungsbeispiel gemäß Figuren 1 und 2 weisen die Fahrzeugscheinwerfer 1 und 1' jeweils zwei optische Sensoren 6 und 8 auf, denen jeweils ein Erfassungsbereich FOV₁ bzw. FOV₂ mit dem Öffnungswinkel α₁ bzw. α₂ zugeordnet ist. Das Fahrzeug 2 ist dabei im Begriff, die Kreuzung zu erkennen. In Figur 2 hat das Fahrzeug 2 die Kreuzung erfasst und die Orientierung der Erfassungsbereiche FOV₁ der ersten Sensoren 6 entsprechend verschwenkt, sodass die Querstraße und sich daran entlang bewegende Verkehrsteilnehmer optimal erfasst werden können.

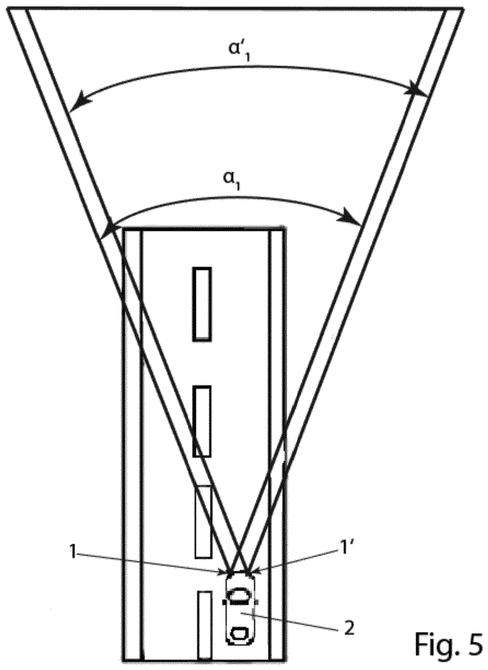

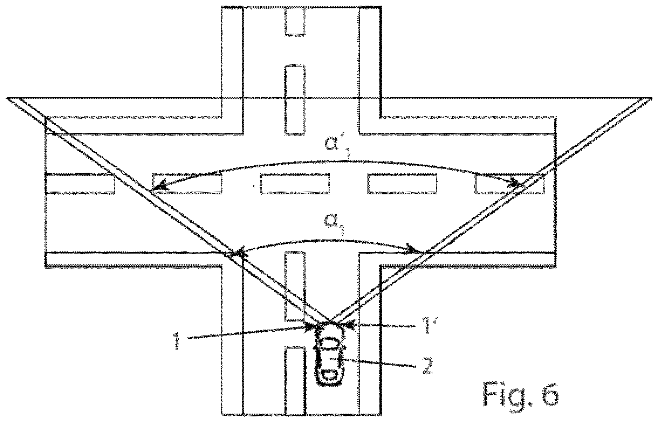

Figuren 5 und 6 zeigen eine weitere Einsatzmöglichkeit eines erfindungsgemäßen Fahrzeugscheinwerfers 1 bzw. 1'. Darin ist das Schwenkmittel 7 dazu eingerichtet, den Öffnungswinkel α₁ bzw. α₁' des Erfassungsbereiches FOV₁ zu verändern und damit die Erfassung der Umgebung zu optimieren. Eine solche Anpassung kann beispielsweise in Abhängigkeit von der Fahrgeschwindigkeit erfolgen, wobei mit zunehmender Fahrgeschwindigkeit der Öffnungswinkel verkleinert wird und umgekehrt. Damit kann die Auflösung der Erfassung fahrsituationsabhängig optimiert werden.

## Patentansprüche

1. Fahrzeugscheinwerfer (1, 1'), insbesondere Kraftfahrzeugscheinwerfer, umfassend
- ein mittels einer lichtdurchlässigen Abdeckscheibe (3) geschlossenes Fahrzeugscheinwerfergehäuse (5),
- zumindest ein innerhalb des Fahrzeugscheinwerfergehäuses (5) angeordnetes Leuchtmodul (4) zur Erzeugung einer Lichtverteilung in eine Hauptabstrahlrichtung, und
- zumindest ein innerhalb des Fahrzeugscheinwerfergehäuses (5) angeordnetes Sensormodul, wobei das zumindest eine Sensormodul (6) zumindest einen optischen Sensor zur optischen Erfassung der Fahrzeugscheinwerferumgebung aufweist, wobei dem zumindest einen optischen Sensor hierzu ein Erfassungsbereich zugeordnet ist, und wobei das Sensormodul (6) dergestalt angeordnet ist, dass die Erfassung der Fahrzeugscheinwerferumgebung durch die Abdeckscheibe (3) hindurch erfolgt, der Fahrzeugscheinwerfer (1, 1') zumindest ein ansteuerbares Schwenkmittel (7) zum räumlichen Verschwenken des gesamten Erfassungsbereichs des zumindest einen optischen Sensors aufweist, **dadurch gekennzeichnet, dass** der Fahrzeugscheinwerfer (1, 1') zumindest einen zusätzlichen im Fahrzeugscheinwerfer (1, 1') positions- und drehfest angeordneten optischen Sensor (8) aufweist, der in dem Fahrzeugscheinwerfer (1, 1') dergestalt angeordnet ist, dass sein Erfassungsbereich in Hauptabstrahlrichtung des Fahrzeugs orientiert ist.

2. Fahrzeugscheinwerfer (1, 1') nach Anspruch 1, umfassend eine Fahrzeugscheinwerferrecheneinheit (9) zur Ansteuerung des zumindest einen ansteuerbaren Schwenkmittels zum räumlichen Verschwenken des gesamten Erfassungsbereichs des zumindest einen optischen Sensors, wobei der Fahrzeugscheinwerfer (1, 1') zudem eine Schnittstelle (10) aufweist, über die Daten mit einem den Fahrzeugschweinwerfer umfassenden Fahrzeug (2) austauschbar sind, wobei die Fahrzeugscheinwerferrecheneinheit (9) zur Verarbeitung der Daten eingerichtet ist und die Ansteuerung des zumindest einen Schwenkmittels unter Berücksichtigung der Daten erfolgt.

3. Fahrzeugscheinwerfer (1, 1') nach Anspruch 2, wobei der Fahrzeugscheinwerferrecheneinheit (9) die von dem zumindest einen optischen Sensor erfassten Daten zugeführt sind, und die Fahrzeugscheinwerferrecheneinheit (9) dazu eingerichtet ist, diese Daten auf das Vorhandensein von verkehrstechnisch relevanten Umgebungsobjekten zu prüfen und bei Feststellen zumindest eines Umgebungsobjekts das Schwenkmittel (7) dergestalt anzusteuern, dass der Schwerpunkt (SP₁) des Erfassungsbereichs in Richtung des erfassten Umgebungsobjekts gelenkt wird.

4. Fahrzeugscheinwerfer (1, 1') nach Anspruch 3, wobei ein verkehrstechnisch relevantes Umgebungsobjekt ein Objekt ist, dass aus der folgenden Liste ausgewählt ist: {Querstraße einer Straßenkreuzung, umgebende Fahrstreifen, Verkehrsteilnehmer}.

5. Fahrzeugscheinwerfer (1, 1') nach einem der vorhergehenden Ansprüche, wobei das Schwenkmittel (7) dergestalt ausgebildet ist, dass die Schwenkbewegung des Erfassungsbereiches ausgehend von einer horizontalen Einbauposition des Fahrzeugscheinwerfers entlang oder innerhalb einer horizontalen Ebene erfolgt.

6. Fahrzeugscheinwerfer (1, 1') nach einem der vorhergehenden Ansprüche, wobei das Schwenkmittel (7) dazu eingerichtet ist, den Erfassungsbereich zwischen zumindest zwei Positionen zu verschwenken, wobei in einer ersten Position der Schwerpunkt (SP₁) des Erfassungsbereiches zumindest teilweise in Hauptabstrahlrichtung gerichtet ist und in einer zweiten Position der Schwerpunkt (SP₁) des Erfassungsbereiches gegenüber der ersten Position zumindest teilweise seitwärts verschwenkt ist, wobei insbesondere vorgesehen sein kann, dass in der zweiten Position der Erfassungsbereich zumindest teilweise entgegen eine Hauptabstrahlrichtung orientiert ist.

7. Fahrzeugscheinwerfer (1, 1') nach Anspruch 6, wobei der Erfassungsbereich in der zweiten Position um einem Winkel in Höhe von zumindest 30° in Bezug auf den Erfassungsbereich der ersten Position verschwenkt ist, insbesondere verdreht ist, wobei die Verschwenkbewegung um eine vertikal orientierte Achse erfolgt.

8. Fahrzeugscheinwerfer (1, 1') nach einem der vorhergehenden Ansprüche, wobei der zumindest eine Sensor verschwenkbar gelagert ist und das ansteuerbare Schwenkmittel (7) einen Aktuator zum Verschwenken des zumindest einen Sensors umfasst.

9. Fahrzeugschweinwerfer nach einem der Ansprüche 1 bis 7, das ansteuerbare Schwenkmittel (7) ein ansteuerbares, schwenkbares Spiegelelement umfasst, wobei der zumindest eine Sensor auf das Spiegelelement gerichtet ist und der Erfassungsbereich über das Spiegelelement gelenkt wird.

10. Fahrzeugschweinwerfer nach Anspruch 9, wobei das Spiegelelement eine MEMS-Komponente mit einer Vielzahl an flächig nebeneinander angeordneten und steuerbaren Mikrospiegel ist, über die der Erfassungsbereich gelenkt werden kann.

11. Fahrzeugscheinwerfer (1, 1') nach Anspruch 10, wobei die Umlenkung über das Spiegelelement hochdynamisch veränderbar ist und der zumindest eine Sensor zur hochdynamischen Erfassung des durch das Spiegelelement gelieferten optischen Bildes eingerichtet ist.

12. Fahrzeugschweinwerfer nach Anspruch 9, wobei das Spiegelelement ein einstückiger Spiegel ist, der um eine vertikale Achse drehbar gelagert ist, wobei dem Spiegel ein Antrieb zugeordnet ist, mit dem die Orientierung des Spiegels durch Drehung um die vertikale Achse veränderbar ist.

13. Fahrzeugscheinwerfer (1, 1') nach Anspruch 12, wobei das Spiegelelement in Hauptabstrahlrichtung vor dem zumindest einen optischen Sensor angeordnet und dergestalt schwenkbar ist, dass in einer ersten Position der Erfassungsbereich des optischen Sensors das Spiegelelement passiert, ohne dieses zu erfassen, und in einer zweiten Position der Erfassungsbereich durch das Spiegelelement dergestalt umgelenkt wird, dass dieser zumindest teilweise entgegen der Hauptabstrahlrichtung des Fahrzeugscheinwerfers orientiert ist.

14. Fahrzeug, umfassend zwei Fahrzeugschweinwerfer nach einem der vorhergehenden Ansprüche, nämlich einen linken und einen rechten Fahrzeugschweinwerfer, wobei das Fahrzeug (2) eine Fahrzeugrecheneinheit (11) aufweist, die mit der Fahrzeugscheinwerferrecheneinheit (9) des jeweiligen Fahrzeugscheinwerfers zur Kommunikation verbunden ist, wobei die Fahrzeugrecheneinheit (11) Informationen bezüglich der Fahrzeuges ausgewählt aus der folgenden Gruppe erfasst {GPS-Signale, Lenkwinkel, Fahrtrichtung, Geschwindigkeit, Kartenmaterial, Beladung, Beschleunigung} und die Fahrzeugscheinwerfer, insbesondere das zumindest eine Schwenkmittel, in Abhängigkeit davon ansteuert.

15. Fahrzeug (2) nach Anspruch 14, wobei das Fahrzeug (2) zur Erfassung von Kreuzungsbereichen eingerichtet ist, und weiters dazu eingerichtet ist, anhand der Position und Orientierung des Fahrzeuges in Bezug auf einen erfassten Kreuzungsbereich die Fahrzeugscheinwerfer (1, 1') anzusteuern.

## Claims

1. Vehicle headlamp (1, 1'), in particular motor vehicle headlamp, comprising
- a vehicle headlamp housing (5) closed by means of a translucent cover lens (3),
- at least one light module (4) arranged inside the vehicle headlamp housing (5) for generating a light distribution in a main radiation direction, and
- at least one sensor module arranged inside the vehicle headlamp housing (5), the at least one sensor module (6) having at least one optical sensor for optical detection of the vehicle headlamp surroundings, the at least one optical sensor being assigned a detection area for this purpose, and the sensor module (6) being arranged in such a way that the vehicle headlamp surroundings are detected through the cover pane (3), the vehicle headlamp (1, 1') has at least one controllable pivoting means (7) for spatially pivoting the entire detection area of the at least one optical sensor, **characterized in that** the vehicle headlight (1, 1') has at least one additional optical sensor (8) which is arranged in the vehicle headlight (1, 1') in a positionally fixed and rotationally fixed manner and is arranged in the vehicle headlight (1, 1') in such a way that its detection area is oriented in the main radiation direction of the vehicle.

2. Vehicle headlamp (1, 1') according to claim 1, comprising a vehicle headlamp computing unit (9) for actuating the at least one actuatable pivoting means for spatially pivoting the entire detection range of the at least one optical sensor, the vehicle headlamp (1, 1') also having an interface (10) via which data can be exchanged with a vehicle (2) comprising the vehicle headlamp, the vehicle headlamp computing unit (9) being set up for processing the data, and the actuation of the at least one pivoting means taking place taking account of the data.

3. Vehicle headlamp (1, 1') according to claim 2, the vehicle headlamp computer unit (9) being supplied with the data detected by the at least one optical sensor, and the vehicle headlamp computer unit (9) being set up to check these data for the presence of traffic-relevant ambient objects and, if at least one ambient object is detected, to control the pivoting means (7) in such a way that the center of gravity (SP1) of the detection range is steered in the direction of the detected ambient object.

4. Vehicle headlamp (1, 1') according to claim 3, wherein an environment object relevant to traffic is an object selected from the following list: {roadway of a road intersection, surrounding lanes, road users} .

5. Vehicle headlamp (1, 1') according to one of the preceding claims, wherein the pivoting means (7) is designed in such a way that the pivoting movement of the detection area, starting from a horizontal installation position of the vehicle headlamp, takes place along or within a horizontal plane.

6. Vehicle headlamp (1, 1') according to one of the preceding claims, wherein the pivoting means (7) is set up to pivot the detection region between at least two positions, wherein in a first position the center of gravity (SP1) of the detection region is directed at least partially in the main radiation direction and in a second position the center of gravity (SP1) of the detection region is pivoted at least partially sideways relative to the first position, wherein it can be provided in particular that in the second position the detection region is oriented at least partially counter to a main radiation direction.

7. Vehicle headlamp (1, 1') according to claim 6, wherein the detection area in the second position is pivoted, in particular rotated, by an angle equal to at least 30° with respect to the detection area of the first position, the pivoting movement being about a vertically oriented axis.

8. Vehicle headlamp (1, 1') according to one of the preceding claims, wherein the at least one sensor is pivotably mounted and the controllable pivoting means (7) comprises an actuator for pivoting the at least one sensor.

9. Vehicle headlight according to any one of claims 1 to 7, the controllable pivoting means (7) comprising a controllable, pivotable mirror element, wherein the at least one sensor is directed onto the mirror element and the detection range is directed via the mirror element.

10. The vehicle headlight of claim 9, wherein the mirror element is a MEMS component having a plurality of controllable micromirrors arranged in a planar juxtaposition through which the detection area can be directed.

11. Vehicle headlight (1, 1') according to claim 10, wherein the deflection via the mirror element can be varied in a highly dynamic manner and the at least one sensor is set up for highly dynamic detection of the optical image supplied by the mirror element.

12. The vehicle headlight of claim 9, wherein the mirror element is a one-piece mirror mounted for rotation about a vertical axis, the mirror having associated therewith a drive for varying the orientation of the mirror by rotation about the vertical axis.

13. Vehicle headlight (1, 1') according to claim 12, wherein the mirror element is arranged in front of the at least one optical sensor in the main radiation direction and can be pivoted in such a way that, in a first position, the detection range of the optical sensor passes the mirror element without detecting it, and, in a second position, the detection range is deflected by the mirror element in such a way that it is oriented at least partially counter to the main radiation direction of the vehicle headlight.

14. Vehicle, comprising two vehicle headlights according to one of the preceding claims, namely a left and a right vehicle headlight, the vehicle (2) having a vehicle computing unit (11) which is connected to the vehicle headlight computing unit (9) of the respective vehicle headlight for communication, the vehicle computing unit (11) detecting information relating to the vehicle selected from the following group {GPS signals, steering angle, direction of travel, speed, map material, load, acceleration} and actuating the vehicle headlights, in particular the at least one swivel means, as a function thereof

15. Vehicle (2) according to claim 14, wherein the vehicle (2) is set up to detect intersection areas, and is further set up to control the vehicle headlights (1, 1') on the basis of the position and orientation of the vehicle with respect to a detected intersection area.

## Revendications

1. Projecteur de véhicule (1, 1'), en particulier projecteur de véhicule automobile, comprenant
- un boîtier de projecteur de véhicule (5) fermé au moyen d'une plaque de recouvrement translucide (3),
- au moins un module d'éclairage (4) disposé à l'intérieur du boîtier de projecteur de véhicule (5) pour produire une répartition de la lumière dans une direction de rayonnement principale, et
- au moins un module de capteur disposé à l'intérieur du boîtier de projecteur de véhicule (5), le au moins un module de capteur (6) présentant au moins un capteur optique pour la détection optique de l'environnement du projecteur de véhicule, une zone de détection étant associée à cet effet au au moins un capteur optique, et le module de capteur (6) étant disposé de telle sorte que la détection de l'environnement du projecteur de véhicule s'effectue à travers la vitre de recouvrement (3), le projecteur de véhicule (1, 1') présente au moins un moyen de pivotement (7) pouvant être commandé pour faire pivoter dans l'espace l'ensemble de la zone de détection d'au moins un capteur optique, **caractérisé en ce que** le projecteur de véhicule (1, 1') présente au moins un capteur optique (8) supplémentaire disposé de manière fixe en position et en rotation dans le projecteur de véhicule (1, 1'), lequel est disposé dans le projecteur de véhicule (1, 1') de telle sorte que sa zone de détection est orientée dans la direction de rayonnement principale du véhicule.

2. Projecteur de véhicule (1, 1') selon la revendication 1, comprenant une unité de calcul de projecteur de véhicule (9) pour commander l'au moins un moyen de pivotement pouvant être commandé pour faire pivoter dans l'espace l'ensemble de la zone de détection de l'au moins un capteur optique, le projecteur de véhicule (1, 1') présentant en outre une interface (10) par laquelle des données peuvent être échangées avec un véhicule (2) comprenant le projecteur de véhicule, l'unité de calcul de projecteur de véhicule (9) étant conçue pour traiter les données et la commande de l'au moins un moyen de pivotement s'effectuant en tenant compte des données.

3. Phare de véhicule (1, 1') selon la revendication 2, dans lequel les données saisies par l'au moins un capteur optique sont amenées à l'unité de calcul du phare de véhicule (9), et l'unité de calcul du phare de véhicule (9) est conçue pour vérifier ces données quant à la présence d'objets environnants importants pour la circulation et, en cas de constatation d'au moins un objet environnant, pour commander le moyen de pivotement (7) de telle sorte que le centre de gravité (SP1) de la zone de détection soit dirigé en direction de l'objet environnant détecté.

4. Projecteur de véhicule (1, 1') selon la revendication 3, dans lequel un objet d'environnement pertinent pour la circulation est un objet choisi dans la liste suivante : {route transversale d'un carrefour routier, voies de circulation environnantes, usagers de la route} .

5. Projecteur de véhicule (1, 1') selon l'une des revendications précédentes, dans lequel le moyen de pivotement (7) est configuré de telle sorte que le mouvement de pivotement de la zone de détection s'effectue le long ou à l'intérieur d'un plan horizontal à partir d'une position de montage horizontale du projecteur de véhicule.

6. Projecteur de véhicule (1, 1') selon l'une quelconque des revendications précédentes, dans lequel le moyen de pivotement (7) est agencé pour faire pivoter la zone de détection entre au moins deux positions, dans lequel, dans une première position, le centre de gravité (SP1) de la zone de détection est au moins partiellement orienté dans la direction principale de rayonnement et, dans une deuxième position, le centre de gravité (SP1) de la zone de détection est au moins partiellement pivoté latéralement par rapport à la première position, étant entendu qu'il peut notamment être prévu que, dans la deuxième position, la zone de détection est au moins partiellement orientée dans le sens opposé à une direction principale de rayonnement.

7. Projecteur de véhicule (1, 1') selon la revendication 6, dans lequel, dans la deuxième position, la zone de détection est pivotée, en particulier tournée, d'un angle d'au moins 30° par rapport à la zone de détection de la première position, le mouvement de pivotement étant effectué autour d'un axe orienté verticalement.

8. Projecteur de véhicule (1, 1') selon l'une des revendications précédentes, dans lequel ledit au moins un capteur est monté pivotant et ledit moyen de pivotement commandable (7) comprend un actionneur pour faire pivoter ledit au moins un capteur.

9. Projecteur de véhicule selon l'une des revendications 1 à 7, le moyen de pivotement commandable (7) comprend un élément de miroir pivotant commandable, l'au moins un capteur étant dirigé vers l'élément de miroir et la zone de détection étant dirigée par l'élément de miroir.

10. Projecteur de véhicule selon la revendication 9, dans lequel l'élément de miroir est un composant MEMS avec une multitude de micromiroirs disposés à plat les uns à côté des autres et pouvant être commandés, par lesquels la zone de détection peut être déviée.

11. Projecteur de véhicule (1, 1') selon la revendication 10, dans lequel la déviation par l'intermédiaire de l'élément de miroir peut être modifiée de manière hautement dynamique et l'au moins un capteur est conçu pour détecter de manière hautement dynamique l'image optique fournie par l'élément de miroir.

12. Projecteur de véhicule selon la revendication 9, dans lequel l'élément de miroir est un miroir d'une seule pièce, qui est monté de manière à pouvoir tourner autour d'un axe vertical, un entraînement étant associé au miroir, au moyen duquel l'orientation du miroir peut être modifiée par rotation autour de l'axe vertical.

13. Phare de véhicule (1, 1') selon la revendication 12, dans lequel l'élément de miroir est disposé devant ledit au moins un capteur optique dans la direction principale de rayonnement et peut pivoter de telle sorte que, dans une première position, la zone de détection du capteur optique passe devant l'élément de miroir sans le détecter et, dans une deuxième position, la zone de détection est déviée par l'élément de miroir de telle sorte qu'elle est orientée au moins partiellement dans le sens contraire à la direction principale de rayonnement du phare de véhicule.

14. Véhicule comprenant deux phares de véhicule selon l'une des revendications précédentes, à savoir un phare de véhicule gauche et un phare de véhicule droit, le véhicule (2) présentant une unité de calcul de véhicule (11) qui est reliée à l'unité de calcul de phare de véhicule (9) du phare de véhicule respectif pour la communication, l'unité de calcul de véhicule (11) détectant des informations relatives au véhicule choisies dans le groupe suivant {signaux GPS, angle de braquage, direction de conduite, vitesse, cartographie, chargement, accélération} et commandant les phares de véhicule, en particulier le au moins un moyen de pivotement, en fonction de celles-ci.

15. Véhicule (2) selon la revendication 14, dans lequel le véhicule (2) est agencé pour détecter des zones d'intersection, et est en outre agencé pour commander les phares (1, 1') du véhicule sur la base de la position et de l'orientation du véhicule par rapport à une zone d'intersection détectée.
